# EUROPÄISCHE PATENTSCHRIFT

(11) **EP 3 367 333 B1**
(45) Veröffentlichungstag und Bekanntmachung des Hinweises auf die Patenterteilung: **24.11.2021**
(21) Anmeldenummer: 17158433.7
(22) Anmeldetag: 28.02.2017
(51) Int. Cl.: G06T 7/521

(54) **VERFAHREN ZUR CHARAKTERISIERUNG EINES OBJEKTS**
METHOD FOR CHARACTERISING AN OBJECT
PROCÉDÉ DE CARACTÉRISATION D'UN OBJET

(43) Veröffentlichungstag der Anmeldung: 29.08.2018
(73) Patentinhaber: Phenospex B.V., 6416 SG Heerlen (NL)
(72) Erfinder: ZHOKHAVETS, Uladzimir, 52066 Aachen (DE); HUMMEL, Grégoire Martin, 6218 HL Maastricht (NL); SCHWARTZ, Stefan, 52146 Würselen (DE)
(74) Vertreter: dompatent von Kreisler Selting Werner - Partnerschaft von Patent- und Rechtsanwälten mbB

(56) Entgegenhaltungen:
- DE-A1-102013 209 109
- GRÉGOIRE HUMMEL ET AL: "PlantEye - ein kommerzieller 3D Laser Scanner für automatisiertes Screening und Phänotypisierung von Pflanzen", 19. WORKSHOP COMPUTER-BILDANALYSE IN DER LANDWIRTSCHAFT UND 2. WORKSHOP UNBEMANNTE AUTONOM FLIEGENDE SYSTEME IN DER LANDWIRTSCHAFT, Bd. 81, Januar 2013 (2013-01), Seiten 235-240, XP055372297, Potsdam
- STROTHMANN WOLFRAM ET AL: "Plant classification with In-Field-Labeling for crop/weed discrimination using spectral features and 3D surface features from a multi-wavelength laser line profile system", COMPUTERS AND ELECTRONICS IN AGRICULTURE, ELSEVIER, AMSTERDAM, NL, Bd. 134, 27. Januar 2017 (2017-01-27), Seiten 79-93, XP029925343, ISSN: 0168-1699, DOI: 10.1016/J.COMPAG.2017.01.003
- Robert Nürnberg: "Calculating the volume and centroid of a polyhedron in 3d", , 2013, Seiten 1-1, XP055373218, Imperial College London Gefunden im Internet: URL:www.ma.ic.ac.uk/~rn/centroid.pdf [gefunden am 2017-05-16]

## Beschreibung

Die vorliegende Erfindung betrifft ein Verfahren zur Charakterisierung eines Objekts mittels Entfernungsmessung.

Bei bekannten Entfernungsmessungen wird ein Objekt linienförmig durch Ultraschall oder Licht beleuchtet. Ultraschall oder Licht werden dabei von einer Quelle erzeugt. Bei den bekannten Laser-Triangulationsverfahren handelt es sich hierbei um einen Linienlaser. Aufgrund der Topologie des Objekts erfolgt eine Verzerrung der Linie. Eine Kamera nimmt die Linienverzerrung auf und ermittelt hieraus ein Höhenprofil entlang der beleuchteten Linie. Kamera und Quelle sind hierbei üblicherweise zu einem Sensor zusammengefasst. Zur Erfassung der vollständigen Oberfläche eines Objekts wird entweder der Sensor relativ zum Objekt bewegt oder das Objekt wird beispielsweise durch ein Förderband bewegt. Somit lässt sich die Höhe des Objekts erfassen.

Die meisten Objekte des täglichen Lebens weisen dabei eine geschlossene im Wesentlichen konvexe Oberfläche auf, welche gut durch die Entfernungsmessung erfasst werden kann. Eine zuverlässige Erfassung ist jedoch erschwert bei ähnlichen, aber nicht exakt gleichen Objekten, wobei beispielsweise jedes Objekt eine individuelle Form aufweist, wie es bei Pflanzen, Ernteprodukten oder Tieren der Fall ist. Auch Autos weisen eine ähnliche, aber nicht exakt gleiche Form auf.

Zur Qualitätsprüfung, Sortierung oder nachfolgenden Bearbeitung wie bei der Ernte ist man nicht nur an den Oberflächenformen interessiert. Vielmehr ist eine weitere Charakterisierung des Objekts erforderlich. Dies gilt insbesondere, falls die zu erfassenden Objekte ähnlich aber nicht exakt gleich sind, so dass beispielsweise eine zuverlässige Charakterisierung von Pflanzen oder Ernteprodukten, Tieren, Autos oder dergleichen wünschenswert ist, um eine individuelle und optimale Behandlung bzw. Bearbeitung des Objekts zu gewährleisten.

Gregoire Hummel et al. "PlantEye - ein kommerzieller 3D Laser Scanner für automatisiertes Scanning und Phänotypisierung von Pflanzen" in 19. Workshop Computer-Bildanalyse in der Landwirtschaft und 2. Workshop Unbemannte autonom fliegende Systeme in der Landwirtschaft, Band 81, 2013, Seiten 235 - 240 beschreibt ein System zur Ermittlung von Pflanzenparametern, wie beispielsweise Einzelblattfläche, Blattanzahl, Blattwinkelstellung, Gesamtblattfläche, Pflanzenhöhe, etc. zur Visualisierung und Auswertung der Wachstumsdaten der Pflanzen.

Aufgabe der vorliegenden Erfindung ist es daher, ein Verfahren bereitzustellen zur Charakterisierung eines Objekts mittels Entfernungsmessung.

Die Aufgabe wird gelöst durch das Verfahren des Anspruchs 1.

Bei dem erfindungsgemäßen Verfahren zur Charakterisierung eines Objekts mittels Entfernungsmessung werden zunächst insbesondere linienweise Höhenprofile ermittelt durch Entfernungsmessung. Bei der Entfernungsmessung kann es sich dabei bei beispielsweise um bekannte Verfahren zur Entfernungsmessung handeln. Nachfolgend werden die ermittelten Höhenprofile ausgewertet zur Charakterisierung des Objekts. Dabei umfasst die Charakterisierung des Objekts die Position. Durch die Position des Objekts ist beispielsweise, eine Sortierung oder nachfolgende Bearbeitung insbesondere ein Abernten möglich.

Vorzugsweise weist jedes Höhenprofil 500 bis 5000 Datenpunkte auf, so dass für jedes linienweise Höhenprofil vorzugsweise 500 bis 5000 Höheninformationen entlang des Höhenprofils ermittelt werden.

Vorzugsweise beträgt der Abstand der linienweisen Höhenprofile 0,2mm bis 2cm und besonders bevorzugt 0,5 bis 2mm. Dabei richtet sich der Abstand der linienweisen Höhenprofile nach der jeweiligen Anwendung und der Größe des zu erfassenden Objekts. So wird der Abstand der linienweisen Höhenprofile klein gewählt für kleine Objekte und groß gewählt für große Objekte.

Vorzugsweise ist der Abstand der linienweisen Höhenprofile konstant.

Erfindungsgemäß werden zu Bestimmung der Position eines Objekts aus den ermittelten Höhenprofilen Flächenelemente ermittelt. Bei diesen Flächenelementen handelt es sich um primitive Flächen wie beispielsweise Dreiecke oder Quadrate. Dabei verbinden die Seiten der Flächenelemente jeweils Datenpunkte der Höhenprofile. Dieses Verfahren ist auch bekannt als Tesselierung, wobei bei der Verwendung von Dreiecken aus zwei Datenpunkten aus einem ersten Höhenprofil und zwei Datenpunkten aus einem zweiten Höhenprofil genau zwei Dreiecke ermittelt werden. Sodann wird für jedes dieser Flächen ein Normalen-Vektor ermittelt ausgehend vom Flächenelement. Somit ist die Anzahl der Flächenelemente und der Normalen-Vektoren identisch. Dabei kann die Richtung der Normalen-Vektoren so definiert sein, dass sie in Richtung des Entfernungsmessers bei konkaven Objekten zeigt und vom Entfernungsmesser weg für konvexe Objekte. Der Kreuzungspunkt der Normalen-Vektoren wird ermittelt als Position des Objektes. Alternativ hierzu wird der Punkt der höchsten Kreuzungsdichte ermittelt als Position des Objekts, insbesondere sofern nicht nur ein Kreuzungspunkt existiert, was lediglich für den Spezialfall einer Kugel als Objekt der Fall ist. Alternativ hierzu wird der Positionsmittelwert oder Schwerpunkt aller Kreuzungspunkte der Normalen-Vektoren als Position des Objekts ermittelt. Hierzu können die Kreuzungspunkte der Normalen-Vektoren zunächst auf eine Ebene projiziert werden und die Position des Objekts in dieser Ebene aus dem Kreuzungspunkt oder dem Punkt mit der höchsten Kreuzungsdichte oder dem Mittelwert bzw. Schwerpunkt aller Kreuzungspunkte ermittelt werden. Bei der Ebene handelt es sich insbesondere um eine Ebene parallel zu der Ebene, in der die Objekte angeordnet sind, bevorzugt eine horizontale Ebene. Hierdurch wird zuverlässig die Position des Objekts ermittelt insbesondere für Objekte, die in ihrer Form zwar ähnlich, jedoch nicht exakt gleich sind wie beispielsweise Pflanzen oder Ernteprodukte kann auf einfache Weise individuell für jedes einzelne Objekt exakt dessen Position bestimmt werden aus den erfassten Höhenprofilen.

Vorzugsweise wird vor der Ermittlung der Position des Objekts ein Tiefpass oder eine Glättung der ermittelten Kreuzungspunkte durchgeführt. Dies erfolgt insbesondere mittels eines Fourier-Tiefpass, bei dem im Frequenzraum die hohen Frequenzen abgeschnitten werden. Hierdurch wird das Verfahren zur Bestimmung der Position eines Objekts robuster, da statistische Ausreißer nicht mehr berücksichtigt werden.

Erfindungsgemäß wird ein Bereich B mit der Fläche A bestimmt, innerhalb dessen sich das Objekt im Wesentlichen befindet. Dabei handelt es sich bei dem Bereich B um einen Kreis mit dem Radius R, wobei sich das Objekt im Wesentlichen innerhalb des Kreises befindet. Dabei kann der Bereich B empirisch bestimmt werden oder berechnet werden, beispielsweise durch den Abstand zweier Objekte. Der Bereich B kann dabei für ein Objekt individuell vorgegeben oder bestimmt werden oder für eine Vielzahl von Objekten identisch gewählt oder bestimmt werden. Sodann wird die maximale Länge der normalen Vektoren begrenzt auf eine Länge C₁² · R. Dabei wird C₁ insbesondere gewählt größer 1. C₁ kann dabei vom Benutzer vorgegeben werden, beispielsweise empirisch vorherbestimmt werden oder im laufenden Verfahren angepasst werden, so dass ein optimales Ergebnis erreicht wird. Durch die Beschränkung der maximalen Länge wird das Berechnungsverfahren für die Kreuzungspunkte der jeweiligen Normalen-Vektoren reduziert. Hierdurch wird der Rechenaufwand zur Bestimmung der Position eines Objekts klein gehalten und die Ausführung des Verfahrens beschleunigt.

Alternativ oder zusätzlich hierzu wird erfindungsgemäß die minimale Länge der Normalen-Vektoren sodann begrenzt auf C₂²·R. Dabei wird C₂ insbesondere gewählt kleiner 1. Eine Begrenzung der minimalen Länge der normalen Vektoren berücksichtigt, dass unmittelbar ausgehend von Flächenelement kein Kreuzungspunkt mit einem anderen Normalen-Vektoren erwartet werden darf. Hierdurch wird der Rechenaufwand zur Bestimmung der Kreuzungspunkte reduziert und daher die Ausführung des Verfahrens beschleunigt. C₂ kann hierzu empirisch bestimmt werden oder aus dem laufenden Verfahren heraus ermittelt werden und angepasst werden.

Vorzugsweise wird die Länge der Normalen-Vektoren modifiziert in Abhängigkeit vom Abstand vom Zentrum des Objekts und/oder in Abhängigkeit von einem Winkel α zwischen der Senkrechten und dem jeweiligen normalen Vektor. Hierbei wird davon ausgegangen, dass im Idealfall bei einem im Wesentlichen konvexen Objekt der Winkel des normalen Vektors zur Senkrechten ausgehend vom Zentrum des Objekts zunimmt. Insbesondere wird ein längerer Normalen-Vektor berücksichtigt, bei Normalen-Vektoren ausgehend von einem Flächenelement, welches weiter vom Zentrum entfernt ist und ein kürzerer Normalen-Vektor wird berücksichtigt, bei Normalen-Vektoren ausgehend von einem Flächenelement sehr nah am Zentrum, bei denen der Winkel α klein ist. Der Zusammenhang zwischen berücksichtigter Länge der Normalen-Vektoren und dem Winkel α kann durch eine vorgegebene Funktion beschrieben werden oder empirisch bestimmt werden. Durch die Modifizierung der berücksichtigten Länge der Normalen-Vektoren wird sichergestellt, dass die erforderlichen Kreuzungspunkte mit anderen normalen Vektoren sicher ermittelt werden können, wobei jedoch ein rechenintensive darüberhinausgehende Berücksichtigung der Normalen-Vektoren vermieden wird.

Vorzugsweise umfasst das Verfahren die Bestimmung eines objektspezifischen Parameters. Durch den objektspezifischen Parameter ist eine Beurteilung des Objekts möglich, wie beispielsweise eine Zustandsbeurteilung wie Wachstumsgröße, Reife, Erscheinungsbild und/oder dergleichen, wobei die Beurteilung quantifiziert erfolgt. Weiter ist durch den objektspezifischen Parameter beispielsweise möglich, eine hiervon abhängige Bearbeitung und/oder Sortierung vorzusehen. Somit ist durch die Charakterisierung des Objekts nicht nur die Höheninformation über das Objekt heranzuziehen für eine nachfolgende Qualitätsprüfung, Sortierung oder Bearbeitung, sondern mindestens ein objektspezifischer Parameter kann hierzu herangezogen werden.

In einer weiteren Ausführungsform des Verfahrens wird zur Bestimmung eines objektspezifischen Parameters ein Bereich B bestimmt, innerhalb dessen sich das Objekt im Wesentlichen befindet. Hierbei kann es sich insbesondere um den bereits vorstehend beschriebenen Bereich B handeln. Sodann wird ein Histogramm erstellt für alle Datenpunkte der Höhenprofile, die innerhalb des Bereichs B liegen. Das Histogramm wird in einen unteren Abschnitt, einen mittleren Abschnitt und einen oberen Abschnitt unterteilt. Für den mittleren Abschnitt des Histogramms wird ein gewichteter Mittelwert ermittelt. Ein Median des Histogramms geteilt durch den gewichteten Mittelwert wird als relativer Dichtemittelpunkt angenommen. Hierbei handelt es sich je nach Anwendung beispielsweise um den Masseschwerpunkt des Objekts. Dazu werden der unter Abschnitt, der mittlere Abschnitt und der obere Abschnitt entsprechend des zu erfassenden Objekts gewählt. Der untere Abschnitt beträgt beispielsweise 50% bis 90% der Datenpunkte des Histogramms ausgehend von den kleinsten Höhenwerten. Der obere Abschnitt beträgt insbesondere 2% bis 30% der Datenpunkte ausgehend von den größten Werten der Höhenprofile. Der mittlere Bereich wird nach unten hin durch den unteren Bereich und nach oben hin durch den oberen Bereich beschränkt.

In einer weiteren Ausführungsform des Verfahrens handelt es sich bei dem Objekt um ein Ernteprodukt und insbesondere um einen Salat oder Kohl. Hierbei ist durch Salat oder Kohl umfasst: Kopfsalat, Eisbergsalat, Eichblattsalat, Chicoree, Lollo Rosso, Lollo Bianco, Radicchio, Endiviensalat und dergleichen, sowie Weißkohl, Spitzkohl, Chinakohl, Rotkohl, Blumenkohl, Romanesco, Broccoli und weitere Kohlarten der Gattung Brassica.

In einer weiteren Ausführungsform des Verfahrens zur Bestimmung eines objektspezifischen Parameters wird ein Bereich B bestimmt, innerhalb dessen sich das Ernteprodukt und insbesondere der Salat oder Kohl im Wesentlichen befindet. Dabei kann es sich bei dem Bereich B insbesondere um den bereits vorstehend beschriebenen Bereich handeln. Sodann wird die Anzahl der Datenpunkt innerhalb des Bereichs ermittelt zu Nₜₒₜₐₗ. Darüber hinaus wird die Fläche A des Bereichs B ermittelt. Sodann wird ein Radius R' definiert und die Anzahl der Datenpunkte innerhalb des Radius R' ermittelt zu N_{core}. Das Verhältnis aus (A · N_{core}) / (R'² · π · Nₜₒₜₐₗ) wird als Öffnungparameter herangezogen. Hierdurch wird für das Ernteprodukt, insbesondere den Salat oder Kohl ein objektspezifischer Parameter ermittelt, welcher einen Rückschluss auf die Qualität des Ernteprodukts zulässt und/oder eine insbesondere quantifizierte Aussage über den Reifegrad und/oder Zustand des Ernteprodukts treffen lässt. Auch für eine nachfolgende Bearbeitung, beispielsweise für das Ernten kann durch den Öffnungsparameter eine Aussage getroffen werden, beispielsweise beim automatischen Greifen, beispielsweise zur Bestimmung der erforderlichen Öffnung des automatischen Greifers. Dem liegt zugrunde, dass insbesondere bei Salaten und Kohl senkrechte äußere Blätter vorhanden sind, von denen keine oder nur eine unzureichende Anzahl an Datenpunkten ermittelt werden können, da diese parallel zum Entfernungsmesser stehen, in dem Sinne, dass diese Blätter parallel verlaufen zur einfallenden Beleuchtung der Entfernungsmessung. Weiterhin weisen Salate oder Kohl meist innere Blätter auf, die kugelförmig miteinander verwachsen sind und somit eine zentrale, kugelförmige Oberfläche ausbilden, die senkrecht zum Entfernungsmesser steht, in dem Sinne, dass die zentrale, kugelförmige Oberfläche im Wesentlichen senkrecht ist zur einfallenden Beleuchtung der Entfernungsmessung. Hierdurch auf einfache Weise und zuverlässig eine Vielzahl von Datenpunkten ermittelt werden können im zentralen, kugelförmigen Bereich des Ernteprodukts. Aufgrund des vorgenannten Verhältnisses lässt sich nun ermitteln, ob überwiegend weit geöffnete senkrecht stehende Blätter vorhanden sind oder überwiegen ein sich geschlossener innerer Kohl oder Salatkopf.

Vorzugsweise kann der Bereich einen Kreis mit einem Radius R sein, wobei dann gilt: R' = C · R mit 0 ≤ C ≤ 1 und sich der Öffnungsparameter ergibt aus N_{core} / C² · Nₜₒₜₐₗ).

Vorzugsweise wird der so berechnete Öffnungsparameter mit einem Schwellwert S verglichen. Liegt der Öffnungsparameter unter oder gleich dem Schwellwert S so wird der Salat oder Kohl als geöffnet bezeichnet. Liegt der Öffnungsparameter über dem Schwellwert S wird der Salat oder Kohl als geschlossen bezeichnet. Vorzugweise wird für den Schwellwert S der Wert 1 angenommen, dieser kann jedoch für verschiedene Ernteprodukte verändert werden. Dabei kann der Schwellwert S insbesondere empirisch bestimmt werden oder vorgegeben werden. Insbesondere erfolgt eine Anpassung des Schwellwerts während des Verfahrens. Dieser Schritt erlaubt eine Kategorisierung des Ernteproduktes, wodurch die nachfolgende Bearbeitung optimal an das jeweilige Ernteprodukt angepasst werden kann. Insbesondere kann der Öffnungsparameter bei der automatisierten Ernte berücksichtigt werden.

In einer weiteren Ausführungsform des Verfahrens erfolgt die Entfernungsmessung durch Ultraschall oder Laser-Triangulation.

In einer weiteren Ausführungsform des Verfahrens erfolgt die Auswertung der ermittelten Höhenprofile zur Charakterisierung eines Objekts in Echtzeit oder zumindest im Wesentlichen in Echtzeit. Somit steht die Charakterisierung des Objekts unmittelbar zur Verfügung, so dass das Objekt entsprechend der Charakterisierung beurteilt, sortiert und/oder weiterverarbeitet werden kann, ohne dass durch die Charakterisierung eine Verzögerung im Prozess erfolgt.

Vorzugsweise erfolgt dabei eine Charakterisierung, sobald ein weiteres linienweises Höhenprofil ermittelt wurde. Somit muss nicht abgewartet werden bis alle Höhenprofile für ein Objekt durch die Entfernungsmessung erfasst wurden, so dass der Rechenaufwand über die Dauer der gesamten Entfernungsmessung, also aller linienweisen Höhenprofile verteilt werden kann.

In einer weiteren Ausführungsform erfolgt die Entfernungsmessung mittels eines Sensors, wobei innerhalb des Sensors insbesondere eine Quelle und eine Kamera angeordnet sind. Dabei wird das Objekt relativ zum Sensor bewegt durch Bewegen des Objekts und/oder durch Bewegen des Sensors. Somit kann aufgrund der relativen Bewegung des Objekts zum Sensor nacheinander ein linienweises Profil nach dem anderen ermittelt werden, um so das gesamte Objekt zu erfassen. Dabei kann bei einer gleichförmigen Bewegung, beispielsweise ein Zeitintervall gewählt werden, für die jeweilige Erfassung eines neuen Höhenprofils. Durch die gleichförmige Bewegung ist hierbei sichergestellt, dass die Höhenprofile im Wesentlichen einen konstanten Abstand aufweisen. Alternativ hierzu kann die zurückgelegte Strecke erfasst werden und bei einem vorgegebenen Abstand vom letzten Höhenprofil ein neues linienweises Höhenprofil erstellt werden. Alternativ hierzu kann die Erstellung eines weiteren Höhenprofils durch einen Trigger-Eingang am Sensor ausgelöst werden durch ein vorgegebenes Ereignis wie beispielsweise ein Bandvorlauf an einem Förderband oder dergleichen. Hierdurch wird sichergestellt, dass ausreichend viele linienweise Höhenprofile ermittelt werden und diese vorzugsweise einen gleichen, beziehungsweise konstanten Abstand aufweisen.

In einer weiteren Ausführungsform erfolgt ein zyklisches Durchlaufen des vorstehend beschriebenen Verfahrens, wobei jeder Zyklus insbesondere der Erfassung eines Objekts entspricht. Hierdurch können eine Vielzahl von Objekten nacheinander charakterisiert werden und eine individuelle Bearbeitung oder Weiterbearbeitung der Objekte erfolgen.

Nachfolgend wird die Erfindung anhand bevorzugter Ausführungsformen unter Bezugnahme auf die beigefügten Zeichnungen näher erläutert.

Es zeigen:
- Fig. 1: einen schematischen Aufbau zur Entfernungsmessung,
- Fig. 2: ein linienweises Höhenprofil ermittelt durch Entfernungsmessung,
- Fig. 3: ein Ausschnitt aus drei Höhenprofilen mit ermittelten Flächenelementen,
- Fig. 4: eine Heatmap zur Anzeige der Kreuzungsdichte von Normalen-Vektoren der Flächenelemente,
- Fig. 5A: ein exemplarisches Flächenelement mit einem Normalen-Vektor,
- Fig. 5B: ein funktioneller Zusammenhang zwischen der Modifizierung der Länge der Normalen-Vektoren und dem Winkel zwischen der Senkrechten und dem normalen Vektor,
- Fig. 6: ein Histogramm aus den ermittelten Datenpunkten der Entfernungsmessung,
- Fig. 7A: eine Seitenansicht eines Ernteprodukts als Salat im geöffneten Zustand,
- Fig. 7B: das Ernteprodukt der Fig. 7a in Draufsicht,
- Fig. 8A: ein Ernteprodukt als Salat in Seitenansicht in geschlossenem Zustand und
- Fig. 8B: das Ernteprodukt der Fig. 8a in Draufsicht.

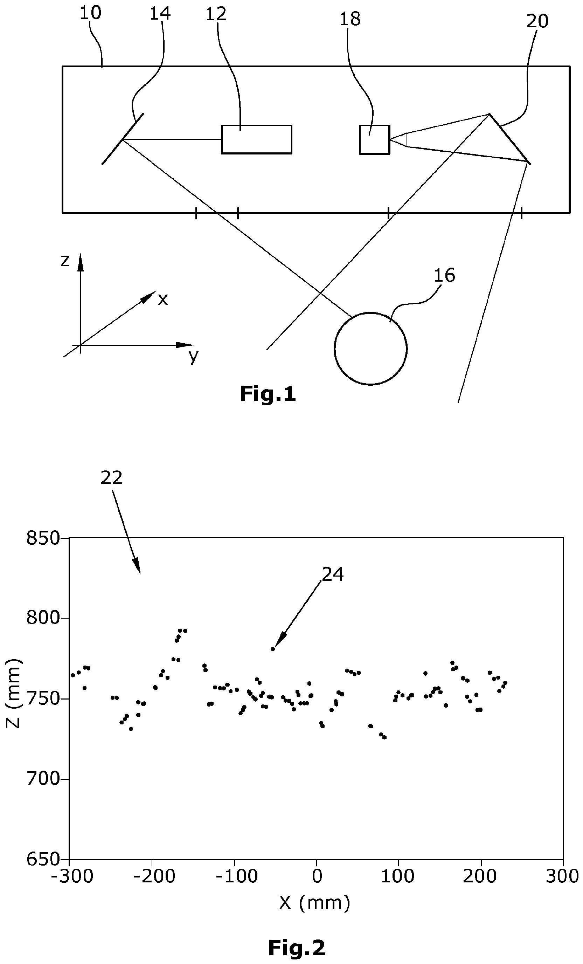

Im erfindungsgemäßen Verfahren zur Charakterisierung eines Objekts mittels Entfernungsmessung werden zunächst linienweise Höhenprofile durch eine Entfernungsmessung ermittelt und sodann geeignet ausgewertet zur Charakterisierung des Objekts, wobei die Charakterisierung die Position und/oder mindestens einen objektspezifischen Parameter des Objekts umfasst. Dabei kann zur Entfernungsmessung ein Laser-Triangulationssystem gezeigt in Fig. 1 verwendet werden. Dies weist eine Sensor 10 auf, in dem ein Linienlaser 12 angeordnet ist, der über einen Spiegel 14 ein Objekt 16 beleuchtet. Über eine Kamera 18, die ebenfalls innerhalb des Sensors 10 angeordnet ist, wird mittels eines weiteren Spiegels 20 die vom Laser 12 erzeugte Linie auf dem Objekt 16 abgebildet. Dabei wird die Linie auf dem Objekt 16 durch die Topologie des Objekts 16 verformt. Aufgrund dieser Verformung kann durch eine Auswerteeinrichtung, die mit der Kamera verbunden ist, ein Höhenprofil entlang der Linie erzeugt durch den Laser 12 ermittelt werden. Hierdurch wird gemäß dem Koordinatensystem der Fig. 1 die Z-Komponente des Objekts 16 ermittelt. Ein solches Höhenprofil 22 ist beispielsweise in der Fig. 2 abgebildet und besteht aus einer Vielzahl von Datenpunkten 24 pro Linie, insbesondere 500 bis 5000 Datenpunkten pro Höhenprofil. Sodann werden zur vollständigen Erfassung des Objekts 16 entweder das Objekt und/oder der Sensor 10 entlang der Y-Achse verschoben und erneut ein linienweises Höhenprofil wie vorstehend beschrieben ermittelt. Hierdurch wird eine Vielzahl von Höhenprofilen ermittelt. Diese weisen üblicherweise einen Abstand von 0,5mm bis 2cm auf, wobei der Abstand insbesondere konstant ist und beispielsweise durch eine kontinuierliche Fortbewegung des Sensors 10 oder des Objekts 16 zueinander durch Zeitablauf oder nach einer relativen Bewegung des Sensors 10 und des Objekts 16 zueinander um eine vorgegebene Strecke vorgegeben wird.

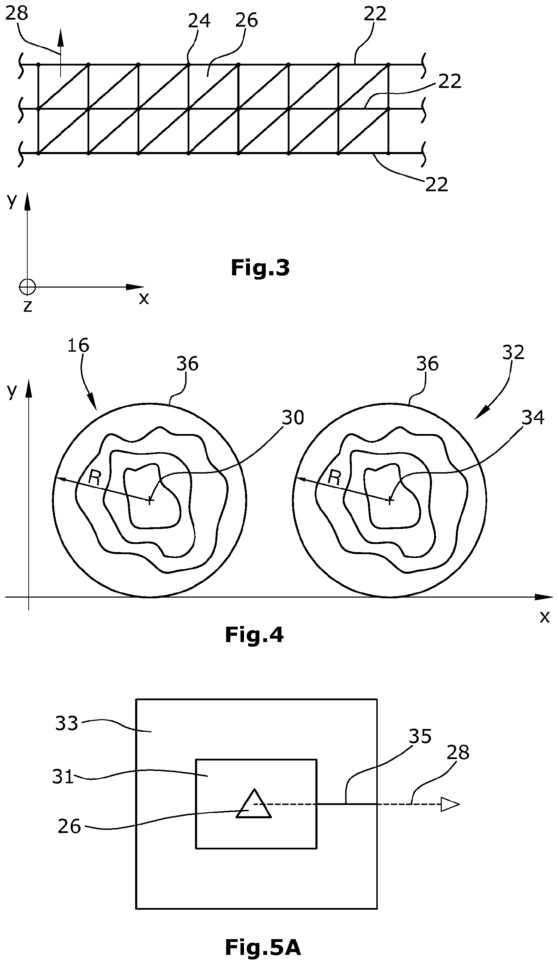

In Fig. 3 ist ein Ausschnitt dargestellt, in dem ein Teil von drei Höhenprofilen 22 dargestellt sind. Dabei werden durch die Punkte 24 die Datenpunkte des jeweiligen Höhenprofils angezeigt. Zur Bestimmung der Position eines Objekts werden aus den Höhenprofilen 22 Flächenelemente 26 ermittelt. In der Fig. 3 handelt es sich hierbei um Dreiecke. Andere Flächenelemente sind jedoch auch denkbar. Dabei liegen die Ecken der Flächenelemente 26 auf den Datenpunkten 24 der Höhenprofile 22 und sind verbunden durch die Seiten der Flächenelemente. Dieser Vorgang ist auch als Tessellation bekannt.

Für jedes der Flächenelemente 26 wird sodann ein Normalen-Vektor 28 ermittelt, der senkrecht auf dem Flächenelement steht. In Fig. 3 ist zur Übersichtlichkeit lediglich einer dieser Normalen-Vektoren 28 dargestellt. Nachfolgend werden alle Kreuzungspunkte dieser Normalen-Vektoren 28 bestimmt. In Fig. 4 ist eine Darstellung als Heatmap beispielsweise wiedergegeben, wobei die Position der Kreuzungspunkte projiziert wurde auf die x/y-Ebene und in der Heatmap der Fig. 4 die Dichte der Kreuzungspunkte wiedergegeben wird. Die Projektion erfolgt dabei in die Ebene parallel zur Ebene, in der die Objekte angeordnet sind. Der Ort der höchsten Kreuzungsdichte 30 wird als Position des Objekts 16 angenommen. In der Fig. 4 ist ein weiteres Objekt 32 dargestellt, welches einen weiteren Punkt der höchsten Kreuzungsdichte 34 aufweist. Hierdurch ist die Position der beiden Objekte 16 und 32 bekannt. Dies gilt insbesondere unabhängig von der Form des Objekts, solange dies eine im Wesentlichen konkave oder konvexe Oberfläche aufweist, wobei bei einer konkaven Oberfläche die Normalen-Vektoren so definiert werden, dass diese in Richtung des Sensors 10 zeigen. Wohingegen bei einer konvexen oder im Wesentlichen konvexen Form des Objekts 16, 32 die Normalen-Vektoren derart definiert werden, dass diese vom Sensor 10 wegweisen, also in negative Z-Richtung.

Somit ist ein robustes Verfahren gegeben zur Bestimmung der Position eines Objekts, insbesondere bei ähnlichen aber nicht exakt gleichen Objekten, wie beispielsweise Pflanzen, Tiere, Autos und dergleichen.

Um den Rechenaufwand zur Bestimmung der Kreuzungspunkte der Normalen-Vektoren zu reduzieren wird ein Radius R bestimmt innerhalb dessen sich das Objekt 16, 32 im Wesentlichen befindet. Der Radius R ist dabei zur Illustration in der Fig. 4 für das Objekt 16 eingezeichnet, dargestellt durch den Kreis 36. Die maximale Länge der jeweiligen Normalen-Vektoren 28 kann nun begrenzt werden auf C₁ · R, wobei C₁ gewählt wird größer 1. Alternativ oder zusätzlich hierzu kann die minimale Länge der Normalen-Vektoren 28 begrenzt werden auf C₂ · R, wobei C₂ kleiner 1 gewählt wird. Hierdurch werden sowohl weit entfernt liegende Kreuzungspunkte als auch unmittelbar am Flächenelement angrenzende Kreuzungspunkte nicht berücksichtigt bei der Ermittlung der Position des Objekts. Dies ist ebenfalls dargestellt in der Fig. 5A, welche exemplarisch ein einzelnes Flächenelement 26 wiedergibt. Von diesem Flächenelement 26 geht ein Normalen-Vektor 28 aus. Um das Flächenelement 26 bzw. den Ausgangspunkt des Normalen-Vektors 28 ist ein erster Bereich 31 angeordnet, der die Minimallänge des berücksichtigten Normalen-Vektors 28 angibt. Ein zweiter Bereich 33 ist um das Flächenelement 26 bzw. den Ausgangspunkt des Normalen-Vektors 28 angeordnet, der die Maximallänge des berücksichtigten Normalen-Vektors 28 angibt. Somit wird nur der Bereich 35 des Normalen-Vektors 28, der sich zwischen den Bereichen 31 und 33 befindet, berücksichtigt. Dies erfolgt für jeden der ermittelten Normalen-Vektoren 28. Hierdurch wird nur der Abschnitt der jeweiligen Normalen-Vektors 28 berücksichtigt, in dem eine Kreuzung mit einem weiteren Normalen-Vektor 28 erwartet werden kann. Der Berechnungsaufwand kann hierdurch deutlich reduziert werden, so dass das Verfahren schneller ablaufen kann, insbesondere in Echtzeit.

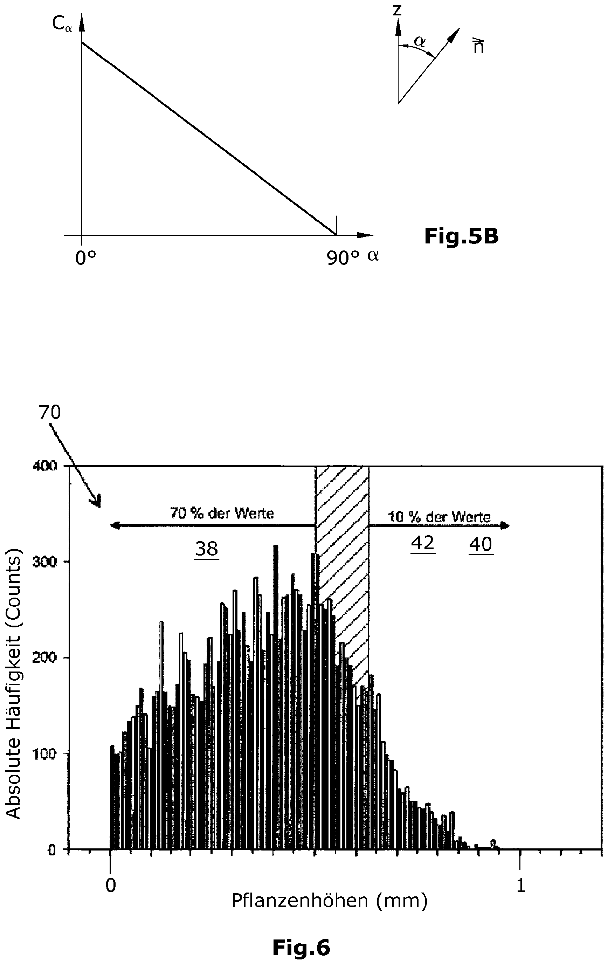

Weiter kann eine Modifizierung der zu berücksichtigenden Länge des Normalen-Vektors erfolgen aufgrund des Winkels α zwischen dem Normalen-Vektor *̅n̅*̅ und der Senkrechten z-Richtung. Hierbei kann die Modifizierung der zur berücksichtigenden Länge der Normalen-Vektoren erfolgen aufgrund einer empirischen Abhängigkeit von α oder wie in Fig. 5B dargestellt aufgrund eines funktionellen Zusammenhangs, wobei die Modifizierung erfolgt über ein Parameter C_{α}, der abgetragen ist über den Winkel α.

Somit kann der Rechenaufwand zur Ermittlung der Kreuzungspunkte der Normalen-Vektoren gering gehalten werden und insbesondere eine Ermittlung der Position des Objekts in Echtzeit garantiert werden.

Zur Bestimmung eines relativen Dichtemittelpunkts des Objekts als objektspezifischer Parameter werden die Datenpunkte innerhalb eines Bereichs als Histogramm aufgetragen wie dargestellt in Fig. 6. Sodann wird das Histogramm unterteilt in einen unteren Abschnitt 38, einen oberen Abschnitt 40 und einen dazwischen liegenden mittleren Abschnitt 42 unterteilt. Dabei sind beispielsweise ausgehend von den kleinsten Höhenwerten beziehungsweise z-Werten 70% der Datenpunkte im unteren Abschnitt 38 und 10% der Datenpunkte ausgehend von den größten Höhenwerten beziehungsweise z-Werten im oberen Abschnitt 40. Somit enthält der dazwischen liegende mittlere Bereich 42 im dargestellten Beispiel 20% der Datenpunkte. Andere Verteilungen sind ebenfalls möglich, so kann der untere Abschnitt insbesondere 50% bis 90% der Datenpunkte enthalten und der obere Abschnitt 40 2% bis 30%. Über die Werte des mittleren Bereichs 42 wird ein gewichteter Mittelwert ermittelt. Zusätzlich wird ein Median des Histogramms ermittelt und der Median durch den gewichteten Mittelwert des mittleren Abschnitts 42 geteilt. Das Ergebnis wird als relativer Dichtemittelpunkt angenommen, was dem relativen Schwerpunkt des Objekts entspricht. Hierbei kann je nach Art der Objekte, die durch das Verfahren charakterisiert werden, der Bereich des unteren Abschnitts 38 und des oberen Abschnitts 40 derart angepasst werden, dass der so ermittelte relative Dichtemittelpunkt mit dem tatsächlichen Dichtemittelpunkt übereinstimmt.

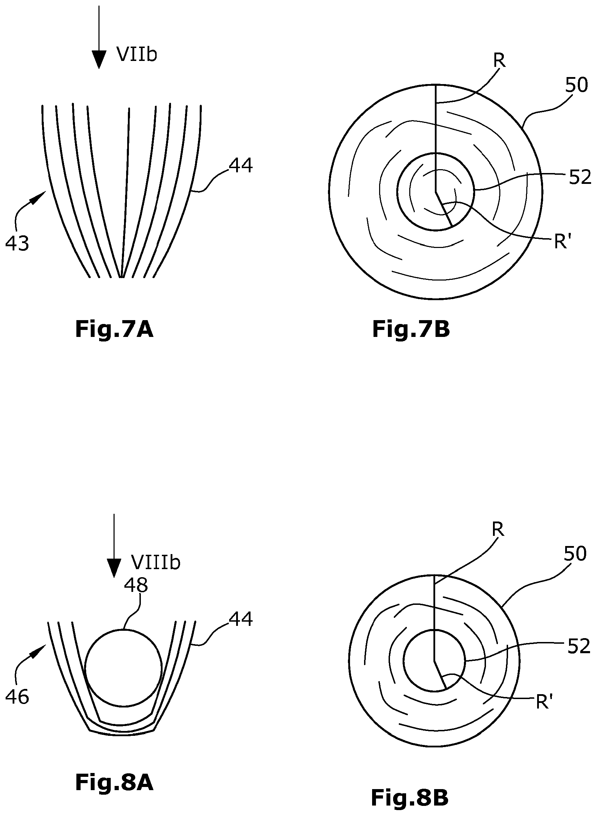

Nachfolgend wird das Verfahren zur Bestimmung eines Öffnungsparameters am Beispiel eines Objekts als Salat in den Fign. 7A bis 8B wiedergegeben.

In der Fig. 7A ist eine Seitenansicht eines Salats dargestellt, in einem geöffneten Zustand. Die meisten Salatblätter 44 wachsen dabei in eine im Wesentlichen senkrechte Richtung oder z-Richtung. Eine Draufsicht des Salats 43 ist in der Fig. 7B dargestellt. In der Fig. 8A ist ein Salat 46 schematisch dargestellt in einem geschlossenen Zustand, bei dem im Zentrum des Salats 46 die Blätter miteinander verwachsen sind und hierbei eine insbesondere kugelförmige Oberfläche 48 ausbilden. Es wird nun ein Kreis 50 definiert mit dem Radius R, innerhalb dessen sich das Ernteprodukt und insbesondere der Salat 43, 46 befindet. Nachfolgend wird die Anzahl der innerhalb des Kreises 50 vorhandenen Datenpunkte als Nₜₒₜₐₗ bestimmt. Danach wird ein zweiter Kreis 52 mit dem Radius R' definiert, um das gleiche Zentrum wie der Kreis 50. Dabei können die Radien R und R' sowie das Verhältnis der Radien R zu R' frei gewählt werden und je nach Anwendungsfall auf die jeweiligen Ernteprodukte abgestimmt werden. Insbesondere können die Radien der Fig. 7B und der Fig. 8B unterschiedlich gewählt sein.

Sodann wird die Anzahl der Datenpunkte innerhalb des Kreises 52 als N_{core} bestimmt. Das Verhältnis von N_{core} zu Nₜₒₜₐₗ bezogen auf die Fläche des jeweiligen Kreises 50, 52 wird als Öffnungsparameter ermittelt. Somit bestimmt sich der Öffnungsparameter als Verhältnis der Datenpunktdichten innerhalb der Kreise 50 und 52. Anders ausgedrückt ist das Verhältnis der Radien R' zu R = C mit 0 ≤ C ≤ 1 so ergibt sich der Öffnungsparameter zu N_{core/}(C² · Nₜₒₜₐₗ).

Da beim Salat 43 die Blätter im Wesentlichen senkrecht zum Sensor 10 stehen kann für diese keine oder nur ein geringe Anzahl von Datenpunkten ermittelt werden. Hingegen kann im kugelförmigen Kernbereich des Salats 46 zuverlässig eine Vielzahl von Datenpunkten erstellt werden, da die kugelförmige Oberfläche 48 des Salats 46 gerade senkrecht zum Sensor ausgerichtet ist und somit durch diesen leicht erfasst werden kann. Auf diese Weise ist leicht ein objektspezifischer Parameter ermittelbar, der den Zustand des Ernteprodukts wiedergibt und somit eine nachfolgende Bearbeitung oder Ernte zuverlässig ausführen lässt. Hierbei kann insbesondere die individuelle Form des spezifischen Ernteprodukts oder eines einzelnen Salats oder Kohls berücksichtigt werden.

## Patentansprüche

1. Verfahren zur Charakterisierung eines Objekts mittels Entfernungsmessung mit den Schritten:
a) insbesondere linienweises Ermitteln von Höhenprofilen durch Entfernungsmessung und
b) Auswerten der ermittelten Höhenprofile zur Charakterisierung des Objekts,
wobei die Charakterisierung die Position des Objekts umfasst,
**dadurch gekennzeichnet, dass** zur Bestimmung der Position eines Objekts
a) aus den ermittelten Höhenprofilen Flächenelemente ermittelt werden,
b) Normalen-Vektoren für jedes dieser Flächenelemente ermittelt werden, wobei die Normalen-Vektoren vom jeweiligen Flächenelement ausgehen, und
c) der Kreuzungspunkt oder der Punkt mit der höchsten Kreuzungsdichte oder Mittelwert aller Kreuzungspunkte der Normalen-Vektoren als Position des Objekts ermittelt wird,
bei welchem weiterhin
a) ein Kreis mit dem Radius R bestimmt wird, innerhalb dessen sich das Objekt im Wesentlichen befindet;
b) die maximale Länge der Normalen-Vektoren begrenzt wird auf C₁² · R, wobei C₁ größer 1 gewählt wird; und/oder
b') die minimale Länge der Normalen-Vektoren begrenzt wird auf C₂² · R, wobei C₂ kleiner 1 gewählt wird.

2. Verfahren nach Anspruch 1, bei welchem die Länge der Normalen-Vektoren modifiziert wird in Abhängigkeit vom Abstand vom Zentrum und/oder in Abhängigkeit von einem Winkel α zwischen der Senkrechten und dem jeweiligen Normalen-Vektor.

3. Verfahren nach einem der Ansprüche 1 oder 2, bei welchem zusätzlich ein objektspezifischer Parameter ermittelt wird, wobei zur Bestimmung des objektspezifischen Parameters
a) ein Bereich B bestimmt wird, innerhalb dessen sich das Objekt im Wesentlichen befindet,
b) ein Histogramm erstellt wird für alle Datenpunkte der Höhenprofile, die innerhalb des Bereichs B liegen,
c) das Histogramm in einen unteren Abschnitt, einen mittleren Abschnitt und einen oberen Abschnitt unterteilt wird,
d) ein gewichtetet Mittelwert für den mittleren Abschnitt des Histogramms ermittelt wird und
e) ein Median des Histogramms geteilt durch den gewichteten Mittelwert als relativer Dichtemittelpunkt genommen wird.

4. Verfahren nach einem der Ansprüche 1 bis 3, bei welchem es sich bei dem Objekt um ein Ernteprodukt und insbesondere um einen Salat oder Kohl handelt.

5. Verfahren nach Anspruch 4, bei welchem zusätzlich ein objektspezifischer Parameter ermittelt wird, wobei zur Bestimmung des objektspezifischen Parameters
a) ein Bereich B bestimmt wird, innerhalb dessen sich das Ernteprodukt und insbesondere der Salat oder der Kohl im Wesentlichen befindet,
b) die Anzahl der Datenpunkte innerhalb des Bereich B ermittelt wird zu Nₜₒ₋ₜₐₗ,
c) die Fläche A des Bereichs B ermittelt wird,
d) ein Radius R' definiert wird,
e) die Anzahl der Datenpunkte innerhalb des Radius R' ermittelt wird zu N_{core} und
f) das Verhältnis aus (A · N_{core})/(R'² · π · Nₜₒₜₐₗ) ermittelt wird als Öffnungsparameter.

6. Verfahren nach einem der Ansprüche 1 bis 5, bei welchem die Entfernungsmessung erfolgt durch Ultraschall oder Laser-Triangulation.

7. Verfahren nach einem der Ansprüche 1 bis 6, bei welchem die Auswertung der ermittelten Höhenprofile zur Charakterisierung eines Objekts in Echtzeit erfolgt.

8. Verfahren nach einem der Ansprüche 1 bis 7, bei welchem mittels eines Sensors die Entfernungsmessung erfolgt und dabei das Objekt relativ zum Sensor bewegt wird durch Bewegen des Objekts und/oder durch Bewegen des Sensors.

9. Verfahren nach einem der Ansprüche 1 bis 8, bei welchem eine kontinuierliche Auswertung erfolgt nach jedem neu erfassten Höhenprofil.

## Claims

1. Method for characterizing an object by means of distance measurement, the method comprising the following steps:
a) determining, in particular line-wise, elevation profiles using distance measurement, and
b) evaluating the determined elevation profiles for a characterization of the object,
wherein the characterization comprises the position,
**characterized in that**, for determining the position of an object,
a) surface elements are determined from the elevation profiles determined,
b) normal vectors are determined for each of the surface elements, wherein the normal vectors originate from the respective surface element, and
c) the point of intersection or the point having the highest intersection density or the mean value of all points of intersection of the normal vectors is determined as the position of the object,
wherein further
a) a circle having a radius R is determined, within which the object is essentially located;
b) the maximum length of the normal vectors is limited to C₁² . A, where C₁ is chosen to be greater than 1;
and/or
b') the minimum length of the normal vectors is limited to C₂² . A, where C₂ is chosen to be smaller than 1.

2. Method of claim 1, wherein the length of the normal vectors is modified in dependence on the distance from the center and/or in dependence on an angle α between the perpendicular and the respective normal vector.

3. Method of one of claims 1 or 2, wherein, in addition, an object-specific parameter is determined, wherein for determining the object-specific parameter,
a) a region B is determined, within which the object is essentially located,
b) a histogram is generated for all data points of the elevation profiles located within the region B,
c) the histogram is divided into a lower section, an intermediate section and an upper section,
d) a weighted mean value is determined for the intermediate section of the histogram, and
e) a median of the histogram divided by the weighted mean value is taken as a relative density value.

4. Method of one of claims 1 to 3, wherein the object is a harvest product and in particular lettuce or cabbage.

5. Method of claim 4, wherein, in addition, an object-specific parameter is determined, wherein for determining an object-specific parameter,
a) a region B is determined, within which the harvest product and in particular lettuce or cabbage is essentially located,
b) the number of the data points within the region B is determined as Nₜₒₜₐₗ,
c) the area A of the region B is determined,
d) a radius R' is defined,
e) the number of the data points within the radius R' is determined as N_{core}, and
f) the ratio of (A . N_{core}) / (R'² . π · Nₜₒₜₐₗ) is determined as an opening parameter.

6. Method of one of claims 1 to 5, wherein the distance measurement is effected using ultrasound or laser triangulation.

7. Method of one of claims 1 to 6, wherein the evaluation of the determined elevation profiles for the characterization of an object is performed in real time.

8. Method of one of claims 1 to 7, wherein the distance measurement is performed using a sensor, and the object is moved relative to the sensor by moving the object and/or by moving the sensor.

9. Method of one of claims 1 to 8, wherein a continuous evaluation is performed after each newly detected elevation profile.

## Revendications

1. Procédé permettant la caractérisation d'un objet au moyen de la mesure de distance présentant les étapes suivantes :
a) en particulier la détermination ligne par ligne de profils de hauteur par mesure de distance et
b) l'évaluation des profils de hauteur déterminés permettant la caractérisation de l'objet,
dans lequel la caractérisation comprend la position de l'objet,
**caractérisé en ce que**, pour déterminer la position d'un objet
a) des éléments de surface sont déterminés à partir des profils de hauteur déterminés,
b) des vecteurs normaux sont déterminés pour chacun desdits éléments de surface, les vecteurs normaux s'étendant à partir de l'élément de surface respectif, et
c) le point d'intersection ou le point présentant la densité d'intersection la plus élevée ou la valeur moyenne de tous les points d'intersection des vecteurs normaux est déterminé(e) comme position de l'objet,
comprenant en outre
a) la détermination d'un cercle présentant un rayon R, à l'intérieur duquel se trouve essentiellement l'objet ;
b) la limitation de la longueur maximale des vecteurs normaux à C₁² • R, C₁ étant choisi supérieur à 1 ;
et/ou
b') la limitation de la longueur minimale des vecteurs normaux à C₂² • R, C₂ étant choisi inférieur à 1.

2. Procédé selon la revendication 1, dans lequel la longueur des vecteurs normaux est modifiée en fonction de la distance par rapport au centre et/ou en fonction d'un angle α entre la perpendiculaire et le vecteur normal respectif.

3. Procédé selon l'une des revendications 1 ou 2, dans lequel un paramètre spécifique à l'objet est en outre déterminé, pour déterminer le paramètre spécifique à l'objet
a) une zone B étant déterminée, à l'intérieur de laquelle se trouve essentiellement l'objet,
b) un histogramme étant créé pour tous les points de données des profils de hauteur se trouvant dans la zone B,
c) l'histogramme étant divisé en une partie inférieure, une partie centrale et une partie supérieure,
d) une moyenne pondérée étant déterminée pour la partie centrale de l'histogramme et
e) une médiane de l'histogramme divisée par la moyenne pondérée étant prise comme point central de densité relatif.

4. Procédé selon l'une des revendications 1 à 3, dans lequel l'objet est un produit récolté et en particulier une salade ou un chou.

5. Procédé selon la revendication 4, dans lequel un paramètre spécifique à l'objet est en outre déterminé, pour déterminer le paramètre spécifique à l'objet
a) une zone B étant déterminée, à l'intérieur de laquelle se trouve essentiellement le produit récolté et en particulier la salade ou le chou,
b) le nombre de points de données à l'intérieur de la zone B étant déterminé comme Nₜₒₜₐₗ,
c) la surface A de la zone B étant déterminée,
d) un rayon R' étant défini,
e) le nombre de points de données à l'intérieur du rayon R' étant déterminé comme N_{noyau} et
f) le rapport de (A • N_{noyau})/(R'² • π• Nₜₒₜₐₗ) étant déterminé comme paramètre d'ouverture.

6. Procédé selon l'une des revendications 1 à 5, dans lequel la mesure de distance s'effectue par ultrasons ou triangulation laser.

7. Procédé selon l'une des revendications 1 à 6, dans lequel l'évaluation des profils de hauteur déterminés permettant de caractériser un objet s'effectue en temps réel.

8. Procédé selon l'une des revendications 1 à 7, dans lequel la mesure de distance s'effectue au moyen d'un capteur et l'objet est ainsi déplacé par rapport au capteur en déplaçant l'objet et/ou en déplaçant le capteur.

9. Procédé selon l'une des revendications 1 à 8, dans lequel une évaluation continue s'effectue après chaque profil de hauteur nouvellement enregistré.
